# EUROPEAN PATENT SPECIFICATION

(11) **EP 2 374 670 B1**
(45) Date of publication and mention of the grant of the patent: **29.08.2012**
(21) Application number: 10250756.3
(22) Date of filing: 12.04.2010
(51) Int. Cl.: B60R 22/195

(54) **An actuation arrangement for a motor vehicle safety device**
Betätigungsanordnung für eine Kraftfahrzeugsicherheitsvorrichtung
Agencement d'actionnement pour dispositif de sécurité de véhicule à moteur

(43) Date of publication of application: 12.10.2011
(73) Proprietor: Autoliv Development AB, 447 83 Vårgårda (SE)
(72) Inventor: Brase, Dan Folke Lennart, 44732 Vargarda (SE); Hjerpe, Erik, 42361 Torslanda (SE)
(74) Representative: Parry, Simon James

(56) References cited:
- WO-A1-2009/110823
- DE-U1-202007 017 748
- US-A- 6 089 605
- US-A1- 2008 054 617

## Description

The present invention relates to an actuation arrangement for a motor vehicle safety device, and more particularly to an arrangement incorporating an actuating piston intended for connection to a safety device for actuation of the device.

The actuation arrangement of the present invention is particularly, though not exclusively, suitable for use in actuating a safety device in the form of a seat-belt pretensioner. Seat-belt pretensioner devices are now widely used in motor vehicles, and are arranged to apply tension to a seat-belt when an accident situation or a potential accident situation is detected. When the pretensioner is actuated, the occupant of the seat is pulled tightly into the seat before the occupant's torso begins to move forwardly relative to the seat due to inertia. Thus the seat-belt can maintain the occupant of the seat in a position which is as far as possible from the steering wheel or dashboard of the vehicle. Consequently, it will be understood that the pretensioner minimises the distance that the occupant of the seat moves forwardly before the seat-belt retards that forward movement.

Gas-operated piston arrangements have been proposed previously for use in pretensioner actuating arrangements of the general type proposed above. One such arrangement is disclosed in US2008/0054617A1, which represents a published US patent application. In this arrangement a piston is provided for axial movement within a cylinder. The cylinder is fluidly connected to a pressurised gas source, and the arrangement is configured such that the flow of high pressure gas from the source into the cylinder acts to drive the piston within the cylinder. The piston is connected to the seat-belt in such a manner that this driven movement of the piston is effective to pretension the seat-belt in the general manner proposed above. Of course, the pressurized gas must only be released for flow into the cylinder in this manner in the event of an accident situation. The arrangement thus comprises a trigger arrangement in which the flow inlet to the cylinder is initially closed by a breechblock. The breechblock is released in response to initial movement of the piston in the opposite direction due to the tension applied to the seat-belt under the inertia of the seat occupant beginning to move forwardly, thereby opening the flow inlet and triggering the actuating movement of the piston.

However, it is to be appreciated that a gas-operated actuating piston of the type proposed above must be displaced quite a significant amount in order adequately to pretension the seat belt. The piston must thus be arranged to receive a large volume of gas in a very short period of time, which means that the flow inlet arrangement must be designed to handle very high gas pressures. The sort of trigger arrangement proposed above, which acts to open the initially closed flow inlet must therefore also be configured to handle high gas pressures, which means that the trigger arrangement itself must be large, heavy and expensive. Such arrangements can also suffer from gas leakage when closed, which can adversely effect the operation of the actuating piston when it is required in an accident situation.

It is an object of the present invention to provide an improved actuation arrangement for a motor vehicle safety device.

According to the present invention, there is provided an actuation arrangement for a motor vehicle safety device, the arrangement comprising an actuating piston for connection to the safety device, the piston being provided within a housing for movement relative to the housing from an initial position to an actuating position, the housing having an inlet for connection to a pressurized gas source for the supply of actuating gas to the housing to drive the piston towards said actuating position, the arrangement being configured to initially prevent movement of the piston towards the actuation position under the action of said actuating gas, and being characterised by the provision of a trigger means which is operable to move the piston from said initial position to a trigger position from which said actuating gas is effective to drive the piston towards said actuating position.

Preferably, the arrangement is configured such that when the piston is located in said initial position, the actuating gas is ineffective to drive the piston towards said actuating position.

Conveniently, said trigger position is intermediate said initial position and said actuating position.

Preferably, said trigger means comprises a trigger-valve selectively operable to direct a triggering flow of gas against said piston to move the piston from said initial position to said trigger position.

Advantageously, said inlet is arranged so as to be substantially occluded by the piston when the piston is located in said initial position, but at least partially open when the piston is located in said trigger position.

Conveniently, the arrangement further comprises a closure member provided in association with the inlet, the closure member being arranged to move between a closed position in which it substantially closes said inlet and an open position in which the inlet is at least partially open, in direct response to movement of the piston from its initial position to its trigger position.

Preferably, said closure member is arranged to engage or bear against the piston.

Advantageously, the arrangement comprises a control valve selectively operable to direct an auxiliary flow of gas against said piston to urge the piston towards said initial position.

Conveniently, the arrangement is configured such that said auxiliary flow is directed against the piston in a direction substantially opposed to said triggering flow.

Preferably, the arrangement further comprises a flow passage in fluid communication with said inlet for connection to said gas source, the passage having a blocking member which is moveable between an open position and a closed position to selectively open and close the flow passage to the flow of said actuating gas, the blocking member being controlled by a further control valve which is operable to direct a flow of gas against the blocking member to urge the blocking member from its open position to its closed position.

Advantageously, said blocking member is biased towards its open position.

Conveniently, the or each said valve is arranged in fluid communication with said pressurized gas source, such that the flow of gas controlled by the or each respective valve is provided from said pressurized gas source.

Preferably, the or each said valve has an exhaust port and is selectively operable to vent gas through the exhaust port.

Advantageously, the or at least one said valve is a 3/2 valve comprising a first port connected to said pressurized gas source, a second port through which the flow of gas controlled by the valve is directed, and said exhaust port.

So that the invention may be more readily understood, and so that further features thereof may be appreciated, embodiments of the invention will now be described by way of example with reference to the accompanying drawings in which:
Figure 1 is a schematic cross-sectional view showing an actuation arrangement in accordance with a first embodiment of the invention, in an initial condition;
Figure 2 is a view corresponding generally to that of figure 1, but which shows the arrangement in an alternate, triggered, condition;
Figure 3, is a view corresponding generally to that of figure 2, showing the arrangement during an alternative mode of operation;
Figure 4 is a view corresponding generally to that of figures 1 to 3, showing the arrangement being reset;
Figure 5 is an enlarged cross-sectional view showing part of a modified actuation arrangement in an initial condition;
Figure 6 is a view corresponding generally to that of figure 5, but which shows the arrangement in an alternate, triggered, condition;
Figure 7 is a schematic cross-sectional view showing an actuation arrangement in accordance with another embodiment comprising two pistons, in an initial condition;
Figure 8 is a view corresponding generally to that of figure 7, showing the arrangement during normal use involving reciprocating movement of one of the two pistons;
Figure 9 is a view corresponding generally to that of figure 8, but which shows the arrangement in an alternate, triggered, condition;
Figure 10 is an enlarged cross-sectional view showing part of another actuation arrangement, in an initial condition;
Figure 11 is a view corresponding generally to that of figure 10, but which shows the arrangement in an alternate, triggered, condition; and
Figure 12 is a view corresponding generally to that of figure 11, but which shows the arrangement being reset.

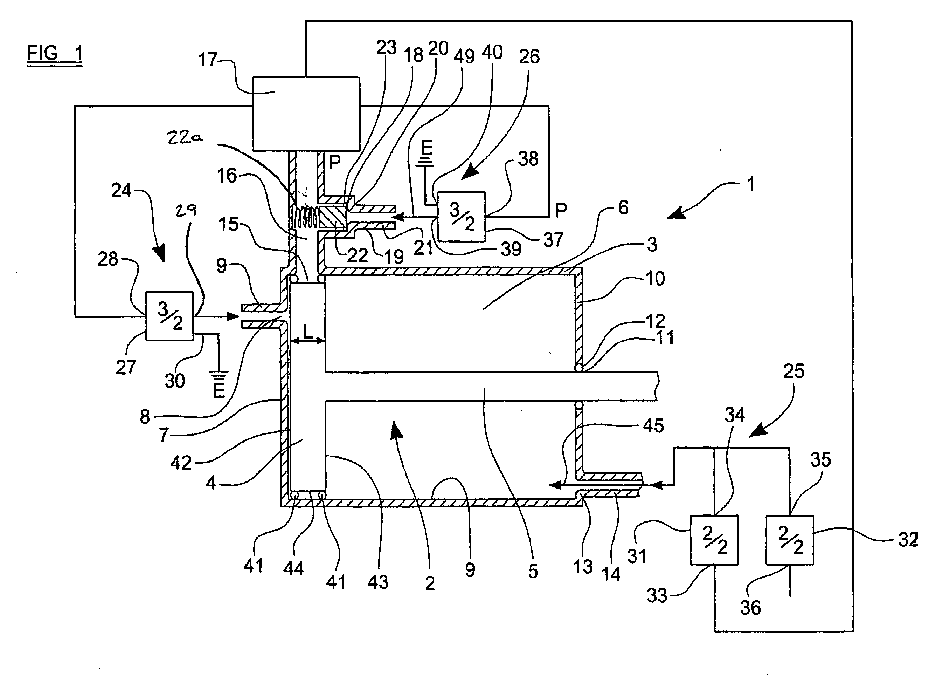

Referring now in more detail to figure 1, there is illustrated an actuation arrangement 1 in accordance with a first embodiment of the invention. An actuating piston 2 is provided for sliding axial movement within a housing 3. The piston comprises a piston head 4 which is mounted at one end of an elongate piston rod 5. The other end of the piston rod (not shown) is configured for connection to a motor vehicle safety device (e.g. a seat-belt pretensioner of the general type already disclosed above) such that movement of the piston 2 relative to the housing 3 may be used to actuate the safety device. In alternative arrangements, however, it is envisaged that the piston head could be provided part-way along the rod, such that the rod extends from both sides of the piston head.

The housing 3 may take any convenient form, but in the arrangement illustrated is provided in the form of an elongate cylinder which is closed at both ends so as to define an interior volume 6. The housing 3 is closed at one end by a first end-wall 7, through which there is formed a small first flow aperture 8. The flow aperture 8 is fluidly connected to a first flow passage 9, the flow passage 9 extending generally parallel to the longitudinal axis of the housing.

The housing 3 is closed at the opposite end by a second end-wall 10 though which there is defined a central aperture 11. The piston rod extends through the central aperture 11, and the aperture 11 is provided with a peripheral seal 12 which serves to seal against the piston rod 5 in a substantially hermetic manner, whilst permitting the piston rod 5 to move in and out of the aperture 11. In the particular arrangement illustrated the seal 12 takes the form of an O-ring seal, although it is to be appreciated that other forms of seal may be used instead.

The second end-wall 10 of the housing also has a small second flow aperture 13 formed through it, the second flow aperture 13 being fluidly connected to a second flow passage 14 which extends generally parallel to the longitudinal axis of the housing.

Substantially adjacent the first end of the housing defined by the first end-wall 7, an inlet port 15 is provided through the sidewall of the housing 3. The inlet port 15 has a relatively large diameter in comparison to the first flow aperture 8 formed through the end-wall 7. The inlet port 15 is provided in fluid communication with a substantially radially extending main flow passage 16. In use, the main flow passage 16 is intended to be connected to a source of pressurised gas 17, such as a compressed gas tank or the like, for the supply of highpressure gas to the interior volume 6 of the housing 3 via the inlet port 15. As will be appreciated, the inlet port 15 and the main flow passage 16 are arranged so that such a flow of gas will be directed into the housing in a direction substantially perpendicular to the longitudinal axis of the housing.

At a position generally between the gas source 17 and the inlet port 15, the main flow passage 16 is provided with a recess 18 which has a small third flow aperture 19 provided through its otherwise closed end 20 and in fluid communication with a third flow passage 21. The recess 18 is configured to receive a blocking member 22 as a close sliding fit within the recess. In the arrangement illustrated in figure 1, the blocking member 22 is provided with a peripheral seal 23 in the form of an O-ring seal which is configured to seal against the inner side walls of the recess 18 in a substantially hermetic manner whilst permitting sliding movement of the blocking member 22 within the recess 18. Figure 1 shows the blocking member 22 in an initial open position in which it is substantially completely accommodated within the recess 18 and is thus substantially clear of the flow passage 16. The blocking member is biased towards this open position by a resilient biasing member, such as the biasing spring 22a illustrated in figure 1. However, as will be explained in further detail below, the blocking member 22 may be operated so as to move out of the recess 18, against the bias of the spring 22a, to adopt a closed position in which it extends substantially across the flow passage 16, thereby closing the flow passage 16 and effectively isolating the inlet port 15 from the gas source 17.

The flow passages 9, 14, 21 which are fluidly connected to each of the above-mentioned flow apertures 8, 13, 19 are preferably fluidly connected to the main gas source 17 via respective valve arrangements shown schematically at 24, 25, 26.

For reasons which will become apparent, the valve arrangement 24 associated with the first flow passage 9 and the first flow aperture 8 can be considered to represent a trigger-valve arrangement. The trigger-valve arrangement 24 comprises a trigger valve 27 in the form of a so-called 3/2 valve having three ports and two directions or states. More particularly, the trigger valve 27 has a first port 28 which is fluidly connected to the gas source 17, a second port 29 which is fluidly connected to the flow passage 9, and a third port 30 which serves as an exhaust port. The valve 27 is operable so as either to fluidly connect the first and second ports 28, 29, or to connect the second and third ports 29, 30.

The second valve arrangement 25 associated with the second flow passage 14 and the second flow aperture 13 represents a control valve arrangement. In the particular embodiment shown in figure 1, the control valve arrangement 25 comprises a pair of so-called 2/2 valves 31, 32 each of which has a two ports and two directions or states. The first control valve 31 has a first port 33 which is fluidly connected to the gas source 17, a second port 34 which is connected to the second flow passage 14 and is operable so as to be either open (i.e the two ports 33, 34 are fluidly connected to one another) or closed (i.e the two ports 33, 34 are isolated from one another). The second control valve 32 has a first port 35 which is fluidly connected to the first port 34 of the first control valve 31 and the second flow passage 14, and a second port 36 which serves as an exhaust port.

The third valve arrangement 26 associated with the third flow passage 21 and the blocking member 22 represents a further control valve arrangement and comprises a further control valve 37 in the form of a so-called 3/2 valve having three ports and two directions or states. More particularly, the further control valve 37 has a first port 38 which is fluidly connected to the gas source 17, a second port 39 which is fluidly connected to the flow passage 21, and a third port 40 which serves as an exhaust port. The control valve 37 is operable so as either to fluidly connect the first and second ports 38, 39, or to fluidly connect the second and third ports 39, 40.

Turning now to consider the piston 2 in more detail, it will be noted that the piston head 4 has a diameter significantly larger than the diameter of the piston rod 5. More particularly, the piston head 4 is sized and configured to form a substantially hermetic close-sliding fit against the inner surface 9 of the housing 3. In the arrangement illustrated schematically in figure 1, the piston head 4 is provided with a pair of circumferential O-ring seals 41, each of which is mounted to the piston head 4 for movement with the piston head and for sealing engagement with the inner surface 9 of the housing 3.

The piston head 4 defines a first surface 42 which is presented in facing relation to the first end-wall 7, and an oppositely directed second surface 43 which is presented in facing relation to the second end-wall 10. As will be appreciated, in the illustrated case of a cylindrical piston head 4, the first surface 42 is circular and the second surface 43 is annular so as to extend around the base of the piston rod 5. The first surface 42 has a larger area than the second surface 43. The piston head has a length L which is at greater than the maximum diameter of the inlet port 15 provided in the sidewall of the housing 3.

Figure 1 shows the piston 2 in its initial position, in which the piston head 4 lies at the first end of the housing 3, generally adjacent the first end-wall 7. In this position, it will be seen that the first surface 42 of the piston is located generally adjacent the first end-wall 7 of the housing. More particularly it will be noted that the outer side surface 44 of the piston head completely covers the inlet port 15 provided in the sidewall of the housing. In its initial position, the piston thus occludes the inlet port 15. Because the inlet port 15 and its associated flow passage 16 are arranged to direct gas from the gas source 17 into the housing 3 in a direction which is substantially perpendicular to the longitudinal axis of the housing and the piston piston, the pressure of the gas acting against the side surface 44 of the piston is ineffective to move the piston relative to the housing. The blocking member 22 can thus be allowed to adopt the initial open position illustrated in figure 1 in which it is substantially fully accommodated within the recess 18, and thus clear of the flow passage 16.

It is proposed that the piston 2 will normally be urged into its initial position illustrated in Figure 1 under the action of an auxiliary flow of gas 45 directed along the second flow passage 14 and through the second flow aperture 13, under the control of the control valves 31, 32. More particularly, it is proposed that in the normal inactive condition of the actuating arrangement, the first control valve 31 will be set so as to fluidly interconnect its two ports 33, 34 thereby permitting gas to flow through the valve, whilst the second control valve 32 will be set to close its exhaust port 36. The auxiliary flow of gas 45 directed into the interior volume 6 of the housing 3 via the control valve 31 will thus act against the second surface 43 of the piston head 4, thereby urging the piston towards its initial position at the first end of the housing in which the piston head occludes the main inlet port 15.

Furthermore, so as not to act against the force of the gas directed into the second end of the housing as described above, the trigger valve 27 will be initially set such that its first port 28 connected to the gas source 17 is closed, and such that its second port 29 is fluidly connected to its exhaust port 30. The first flow passage 8 is thus vented to the atmosphere via the exhaust port 30.

As regards the third valve arrangement 26, it is proposed that in the normal inactive condition of the actuating arrangement the further control valve 37 will be set such that its first port 38 connected to the gas source 17 is closed, and such that its second port 39 is fluidly connected to its exhaust port 40. The third flow passage 21 is thus vented to the atmosphere via the exhaust port 40.

The actuating arrangement is arranged to be triggered in response to the detection by an appropriate sensor arrangement of an accident situation occurring or likely to occur. In such a situation, the trigger valve 27 is operated so as to switch its setting to from the state indicated above to a trigger-state in which the exhaust port 30 is closed and the first and second ports 28, 29 are fluidly interconnected. The trigger valve 27 is thus switched so as to direct a triggering flow of gas 46 from the gas source 17, along the first flow passage 9 and through the first flow aperture 8. This triggering flow 46 is thus directed against the first surface 42 of the piston head. As will be appreciated, because the triggering flow 46 and the auxiliary flow 45 are both supplied from the pressurized gas source 17 they will both be at substantially the same pressure. However, because the first piston surface 42 against which the trigger flow 46 acts is larger than the second surface 43 against which the auxiliary flow 45 acts, the force applied to the piston by the trigger-flow 46 will exceed the opposing force applied to the piston by the auxiliary force. The triggering flow 46 will thus drive the piston away from the first end-wall, as indicated by arrow 47. The piston 2 is thus urged from its initial position illustrated in figure 1 to a trigger position in which the piston head 4 moves clear of the main inlet port 15, thereby opening up the port and its associated main flow passage 16. This exposes the piston to a flow of actuating gas 48 directed into the housing through the open inlet 15. The actuating gas 48 thus serves to drive the piston with even greater force and speed towards an actuating position in which the piston rod 5 is urged outwardly relative to the housing for actuation of the associated safety device.

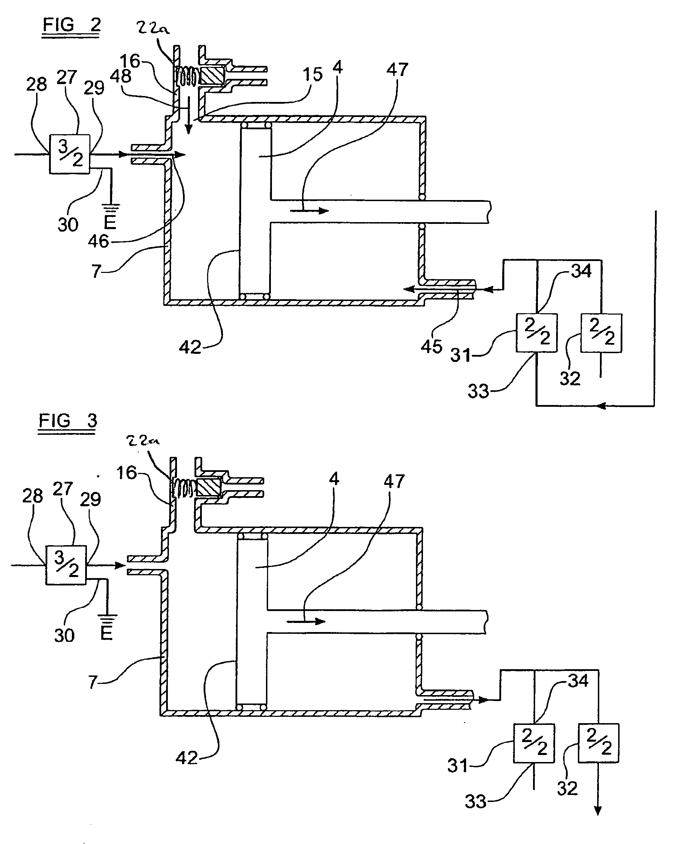

As will be appreciated, in the mode of operation described above, the trigger-flow 46, and also the main actuating flow 48 of gas both act against the oppositely directed auxiliary flow 45. It is therefore envisaged that triggering and indeed the actuating function of the arrangement can be improved by operating the control valves 31, 32 of the second valve arrangement 25 in order to vent the second flow passage 14 and its associated flow aperture 13 to the atmosphere and thereby eliminate the auxiliary flow 45 upon triggering of the arrangement. It is proposed to do this by switching the first control valve 31 so as to close its inlet port 33 connected to the gas source 17, and also to switch the second control valve 32 so as to open its exhaust port 36. This allows air or gas within in the housing on the opposite side of the piston head 4 to the triggering flow 46 and the main actuating flow 48 to vent to the atmosphere through the second control valve 32 as illustrated schematically in figure 3, thereby permitting quicker triggering and actuation of the arrangement.

In some installations it may be desirable to actively control the speed with which the piston 2 is driven by the actuating flow of gas 48, so as to control the manner in which the relevant safety device is deployed or actuated. It is therefore proposed to actively control the settings of the two control valves 31, 32 in order to selectively apply the auxiliary flow 45 in opposition to the main actuating flow 48 (thereby slowing the movement of the piston) and to selectively vent the second gas flow passage 14 to the atmosphere (thereby speeding up the movement of the piston).

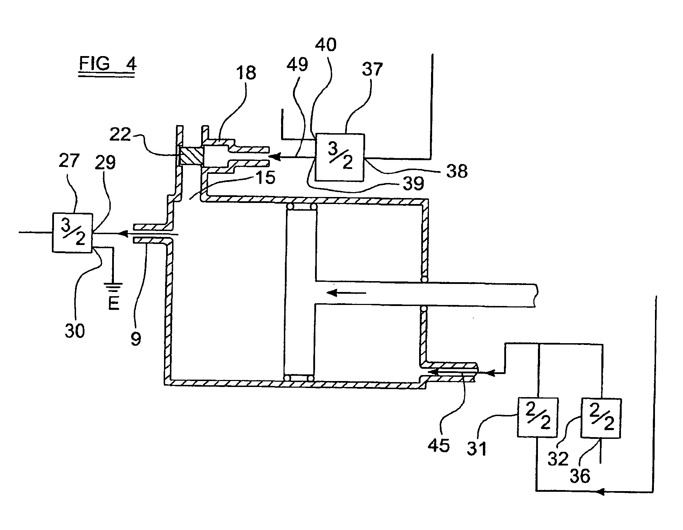

The above-described actuating arrangement can also be conveniently reset following actuation, ready for re-use. This is achieved by operating the further control valve 37 so as to close its exhaust port 40 and to interconnect its first and second ports 38, 39. This is effective to direct a flow of gas 49 from the gas source 17 into the recess 18. This flow of gas 49 is thus directed against the blocking member 22 and is effective to move the blocking member 22 from its open position illustrated in figures 1 to 3, against the biasing force of the spring 22a to a closed position illustrated in figure 4 in which the spring 22a is compressed and the blocking member 22a substantially closes the main flow passage 16, thereby preventing the flow of gas along the main flow passage and into the housing 3 through the inlet port 15. The trigger-valve is also switched so as to connect its exhaust port 30 to its second port 29 connected to the flow passage 9. This is effective to vent the air or gas within the housing 3 through the exhaust port 30. The first control valve 31 is then set so as to permit the flow therethrough of gas from the gas source, and the second control valve 32 is set such that its outlet port 36 is closed. The auxiliary flow of gas 45 is thus permitted to act against the second surface 43 of the piston in the absence of both the above-mentioned triggering flow and the actuating flow, so as to drive the piston back towards its initial position (as illustrated in figure 4) in which it occludes the inlet port 15.

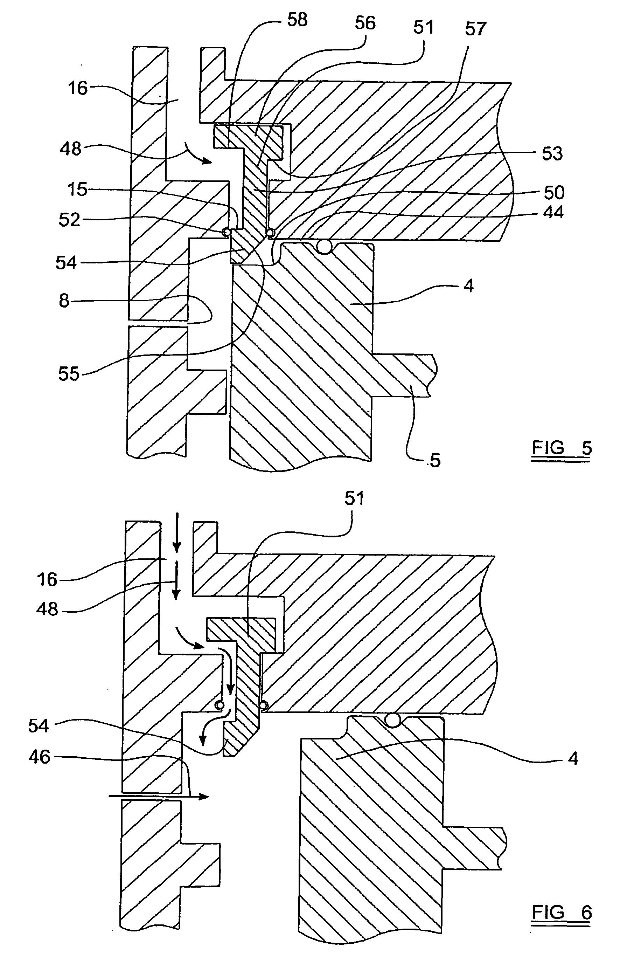

Turning now to consider figures 5 and 6, a modified arrangement will be described. Referring initially to figure 5 which shows the piston 2 in its initial position, it will be noted that in this arrangement the piston head 4 has a recess 50 formed at the corner between the first surface 42 and the side surface 44. When the piston is located in its initial position as illustrated in figure 5, it will be seen that the recess 50 lies adjacent the main inlet port 15.

A closure member 51 is provided within the inlet port 15. The closure member 51 is slideably received within the inlet port 15 for movement therein, and is sealed against the sides of the inlet port by a seal 52 which is retained in a peripheral groove formed around the inlet port 15. The seal member has a shank portion 53 which is smaller in cross-sectional area than the inlet port. The lower end of the closure member has an enlarged foot 54 of generally triangular cross-sectional form presenting a chamfered surface 55 towards the piston head. The foot is sized and configured so as to be received within the recess 50 formed on the piston head 4 and to rest against the piston head. The upper region of the foot 54 is sized to initially close and seal the inlet port 15. The upper end of the closure member has an enlarged head 56 defining a pair of shoulders 57, 58 which are offset relative to one another. The first shoulder 57 is located closer to the lower end of the foot 54 than the second shoulder 58.

In the initial position of the piston 2 illustrated in figure 5, the closure member 51 is positioned such that its foot 54 closes and substantially seals the inlet port 15, thereby helping to prevent the leakage of gas through the inlet aperture and into the housing 3. However, as the piston 2 is urged towards its trigger position under the action of the triggering flow 46, the piston head 4 moves clear of the inlet port 15. The closure member 51 is thus no longer held in its initial sealing position by the piston head, and is urged to move to the open position illustrated in figure 6 under the action of the main actuating flow 48 acting against the foot 54. The closure member 51 is thus urged downwardly (in the orientation illustrated) until the first shoulder 57 of the head 56 engages a corresponding shoulder defined around the inlet opening. In this open position, the foot 54 of the closure member has moved clear of the inlet port 15, and the main actuating flow 48 is thus allowed to pass through the opening, down the side of the shank 53 and past the foot 54 so as to drive the piston in the manner already described above.

When the actuation arrangement is reset by urging the piston 2 back towards its initial position in the general manner proposed above, the piston head 4 will be moved towards the foot 54 of the closure member. The chamfered surface 55 of the closure member cooperates with the piston head during this resetting movement of the piston to return the closure member 51 back to its initial sealing position illustrated in figure 5.

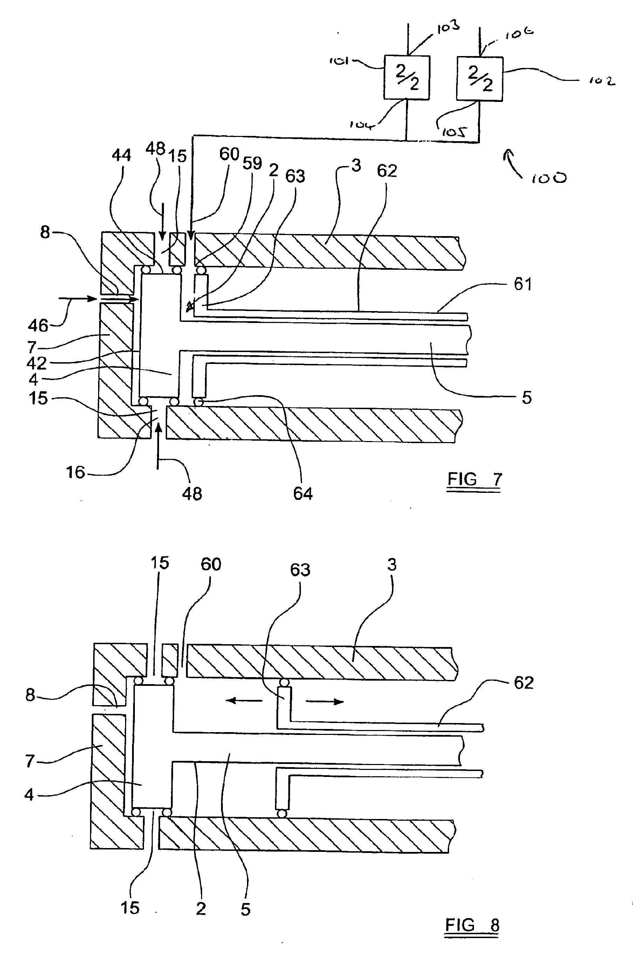

Turning now to consider figures 7-9 of the accompanying drawings, there is illustrated an alternative embodiment of the present invention incorporating two pistons.

Having regard initially to figure 7, it would be noted that the arrangement of this embodiment is generally similar to that illustrated in figures 1-4 in the sense that the housing 3 is generally cylindrical in form and is closed at its first end by an end wall 7 through which the first flow aperture 8 is formed and through which the triggering flow of gas 46 is directed under the control of the trigger valve 27 (not shown in figure 7). In the particular arrangement illustrated in figure 7, the housing 3 is provided with two main inlet ports 15 arranged diametrically opposite to one another but again generally adjacent the first end wall 7 of the housing. Figure 7 shows the main actuating piston 2 in its initial position in which it will be seen that the outer side surface 44 of the piston head 4 covers and therefore occludes both of the main outlet ports 15. Prior to triggering movement of the piston out its initial position illustrated in figure 7 under the action of the triggering flow 46, the piston head thus prevents the diametrically opposed actuating flows of gas 48 from entering the interior volume of the housing 3 in a substantially identical manner to that described above.

A short distance from the upper main inlet port 15, the housing 3 is provided with an auxiliary inlet port 59, which is fluidly connected to an appropriate flow of passage for connection to the main pressurised gas source 17, and which is associated with a control valve arrangement 100 in order to selectively direct a respective auxiliary flow of gas 60 into the interior volume of the housing 3. As will be noted, the auxiliary inlet port 59 and its associated flow passage is provided on the opposite side of the main inlet ports 15 to the end wall 7.

In the particular embodiment shown in figure 7, the control valve arrangement 100 comprises a pair of so-called 2/2 valves 101, 102 each of which has a two ports and two directions or states. The first control valve 101 has a first port 103 which is fluidly connected to the gas source 17 (not shown), a second port 104 which is connected to the auxiliary inlet port 59 and is operable so as to be either open (i.e. the two ports 103, 104 are fluidly connected to one another) or closed (i.e. the two ports 103, 104 are isolated from one another). The second control valve 102 has a first port 105 which is fluidly connected to the first port 104 of the first control valve 101 and the auxiliary inlet port 59, and a second port 106 which serves as an exhaust port.

A secondary piston 61 is provided in co-axial relationship with the main actuating piston 2. More particularly, it will be noted that the auxiliary piston 61 has an elongate and hollow piston rod 62 which is slidingly engaged over the piston rod 5 of the main actuating piston 2. At the end of the piston rod 62 located generally adjacent to the head 4 of the main piston, the auxiliary piston has an enlarged piston head 63 which is sealed against the inner surface of the housing by an appropriate peripheral seal 64. In the particular arrangement illustrated, the seal 64 takes the form of an O-ring seal.

Figure 7 illustrates the auxiliary piston 62 in an initial position in which the piston head is located in the region of, but spaced slightly from the piston head 4 of the main actuating piston 2. More particularly, it will be seen that the head 63 of the auxiliary piston 62 is positioned with respect to the auxiliary inlet port 59 such that the auxiliary flow of gas 60 directed through the auxiliary inlet port 59 flows into the space defined between the two piston heads 63, 4.

During normal operation of the actuating arrangement, as illustrated schematically in figure 8, there will be no triggering flow 46 directed through the first flow aperture 8 provided in the first end wall 7 of the housing 3, and so the main actuating piston 2 will remain in its initial position in which its piston head 4 occludes the main inlet apertures 15 and thus prevents the inflow of actuating gas 48. However, the auxiliary piston 62 is arranged for reciprocating axial movement along the piston rod 5 of the main piston 2, under the action of the auxiliary flow 60 directed into the space between the two piston heads 63, 4. For example, by opening the first control valve 101 such that its ports 103, 104 are fluidly connected and closing the second control valve such that its ports 105, 106 are isolated from one another, the auxiliary flow 60 will be directed into the space defined between the two piston heads 63, 4 so as to drive the secondary piston to the right as illustrated. By then switching the two control valves such that the first control valve 101 is closed and the second control valve 102 is opened, the space defined between the two piston heads 63, 4 will be vented to the atmosphere through the exhaust port 106, thereby permitting the piston 63 to move to the left as illustrated.

Upon detection of an accident situation, or an imminent accident situation, the trigger valve 27 is operated in the manner described in detail above so as to direct the trigger flow of gas 46 through the first flow aperture 8 provided in the end wall 7 and into the housing 3. This trigger flow therefore acts against the first surface 42 of the main piston head 4, and thus drives the main actuating piston 2 towards its trigger position, whereupon the opposed main inlet ports 15 are opened for the flow therethrough of the main actuating gas 48, which will therefore become effective to drive the main actuating piston 2, taking with it the auxiliary piston 62, for movement of both pistons in the direction indicated generally by the arrow 47.

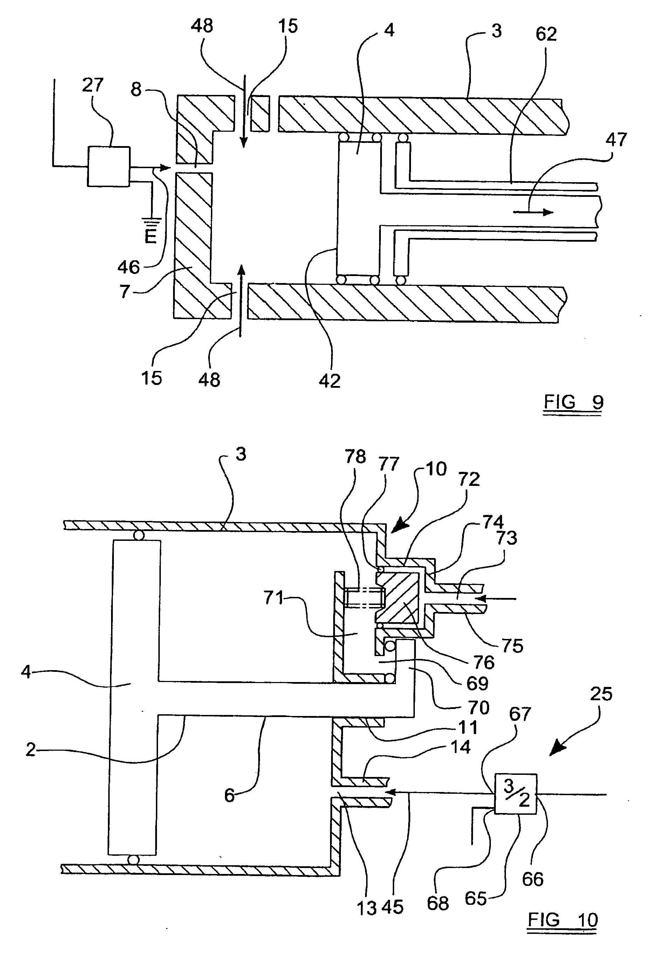

Turning now to consider figures 10 to 12, there is illustrated an alternative valve arrangement at the second end 10 of the housing 3. The first point to note with regard to this modified arrangement is that the second valve arrangement 25 arranged in association with the second flow aperture 13 and its associated second flow passage 14 comprises a single control valve 65 which takes the form of a so-called 3/2 valve. This is in contrast to the arrangement described above in detail in connection with figures 1 to 4, in which the second valve arrangement 25 comprised a pair of 2/2 control valves. In the modified arrangement of figures 10 to 12, the control valve 65 has a first port 66 which is provided for connection to the pressurised gas source 17, a second port 67 which is connected to the second flow passage 14 for the direction of the auxiliary flow of gas 45 into the housing 3, and a third port 68 which serves as an exhaust port.

The second end 10 of the housing 3 is provided with an exhaust aperture 69 which is provided adjacent the central aperture 11 through which the piston rod 5 extends, and which is initially closed by a projection 70 formed at the end of the piston rod 5. As illustrated in figure 10, the projection 70 initially seals the exhaust aperture 69 when the piston 2 is located in its initial position.

The exhaust aperture 69 is provided in fluid communication with an internal flow passage 21 provided within the housing 3. The flow passage 71 is associated with a recess 72 which has a small flow aperture 73 provided through its otherwise closed end 74 and which is in fluid communication with a flow passage 75. The recess 72 is configured to receive a blocking member 76 as a close sliding fit within the recess. In the arrangement illustrated in figure 10, the blocking member 76 is provided with a peripheral seal 77 in the form of an O-ring seal which is configured to seal against the inner side walls of the recess in a substantially hermetic manner thus permitting sliding movement of the blocking member within the recess. Figure 10 shows the blocking member in an initial open position in which it is substantially completely accommodated within the recess 72 and is thus substantially clear of the flow passage 71. The blocking member 76 is biased towards this open position by a biasing spring 78. However, the blocking member 76 may be operated so as to move against the biasing force applied by the spring 78, out of the recess 72 so as to adopt a closed position in which it extends substantially across the flow passage 71, thereby closing the flow passage and effectively isolating the exhaust aperture 69 from the gas within the housing 3.

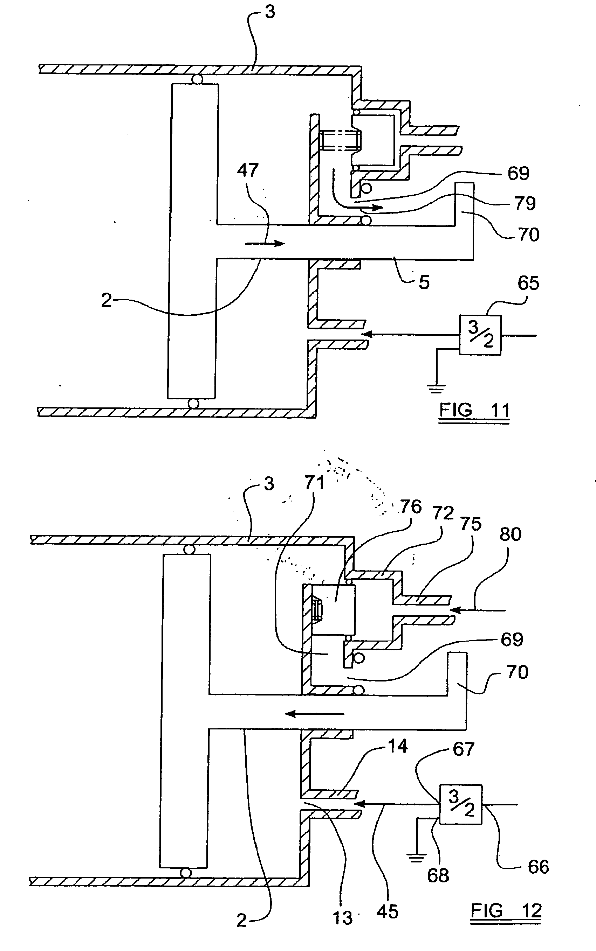

It is envisaged that upon triggering of the arrangement of figures 10 to 12, by the application of the triggering flow of gas 46 in the general manner described in detail above, the control valve 65 will be operated so as to close its first port 66 and to fluidly interconnect its second and third ports 67, 68. This is effective to remove the auxiliary flow 45 and effectively vent the interior volume of the housing 3 through the flow passage 14 and the exhaust port 68. This permits swift initial movement of the piston 2 from its initial position to its trigger position. As will be noted from figure 11 in particular, this movement of the piston 2 causes the projection 70 at the end of the piston rod 5 to move clear of the exhaust aperture 69, thereby opening the aperture 69 and permitting substantially unrestricted flow of gas out of the interior volume of the housing 3 as the piston 2 is driven in the direction indicated generally by arrow 47 under the action of the main flow of actuating gas. As will be appreciated, the interior volume of the chamber is thus vented upon initial movement of the actuating piston 2 in order to further facilitate swift and efficient movement of the piston towards its actuating position.

Figure 12 illustrates the arrangement of this embodiment being reset to its initial configuration. In order to reset the piston 2, the control valve 65 is operated so as to close its exhaust port 68 and fluidly interconnect its first and second ports 66, 67, thereby restoring the auxiliary flow of gas 45 which is directed into the housing 3 via the flow passage 14 and the inlet aperture 13. At the same time, it is proposed to direct a flow of gas 80 into the recess 72 via the flow passage 75, under the control of an appropriate control valve (not illustrated). As will be appreciated, this flow of gas 80 is directed against the blocking member 76 and is thus effective to move the blocking member 76 from its initial position illustrated in figures 10 and 11, to its closed position illustrated in figure 12, against the biasing force of the spring 78. The blocking member 76 is thus operated so as to close the flow passage 71, thereby preventing the flow of gas within the housing 3 from passing out through the exhaust aperture 69 as the piston 2 is driven back towards its initial position by the auxiliary flow 45. When the piston 2 is located in its initial position, the projection 70 again closes the exhaust aperture 69, whereupon the flow of gas 80 may be switched off, thereby permitting the blocking member 76 to return to its initial open position under the action of the biasing spring 78. The arrangement is thus reset and ready for another actuation.

Although the invention has been described above with particular reference to use in actuating a safety device such as a seat-belt pretensioner, it is to be appreciated that the actuation arrangement of the present invention could be used to actuate other motor vehicle safety devices such as hood or bonnet lifting arrangements to provide protection to pedestrians. In such arrangements it is envisaged that the actuating piston of the invention could be arranged to directly lift the hood or bonnet of the motor vehicle in order to space it from the underlying engine block. Other potential applications for the actuating arrangement of the present invention may include reversible airbags positioned in the side bolsters of motor vehicle seats, or so-called anti-submarine bags positioned at the front of the seat cushion, or as an actuating arrangement for an anti-whiplash seat arrangement. It is also envisaged that the actuating arrangement of the present invention could be used to pull aside an internal or external airbag following inflation of the airbag in order to improve the driver's visibility after airbag activation.

Nevertheless, the actuating arrangement of the present invention is particularly beneficial when used to actuate seat-belt pretensioning arrangements. It has been found that an arrangement in accordance with the present invention may exert a force of approximately 300N over a period of 50 milliseconds. This compares very favourably indeed with more conventional actuating piston arrangements incorporating valves in the main gas flow passage to the piston housing, which typically produce a force of 300N over a period of 100 milliseconds. In other words, the actuating arrangement of the present invention has been found to be 100% quicker than such prior art arrangements.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. An actuation arrangement for a motor vehicle safety device, the arrangement comprising an actuating piston (2) for connection to the safety device, the piston (2) being provided within a housing (3) for movement relative to the housing (3) from an initial position to an actuating position, the housing (3) having an inlet (15) for connection to a pressurized gas source (17) for the supply of actuating gas (48) to the housing (3) to drive the piston (2) towards said actuating position, the arrangement being configured to initially prevent movement of the piston (2) towards the actuation position under the action of said actuating gas (48), and being **characterised by** the provision of a trigger means (24, 27) which is operable to move the piston (2) from said initial position to a trigger position from which said actuating gas (48) is effective to drive the piston (2) towards said actuating position.

2. An actuation arrangement according to claim 1, configured such that when the piston (2) is located in said initial position, the actuating gas (48) is ineffective to drive the piston (2) towards said actuating position.

3. An actuation arrangement according to claim 1 or claim 2, wherein said trigger position is intermediate said initial position and said actuating position.

4. An actuation arrangement according to any preceding claim, wherein said trigger means comprises a trigger-valve (27) selectively operable to direct a triggering flow of gas (46) against said piston (2) to move the piston from said initial position to said trigger position.

5. An actuation arrangement according to any preceding claim, wherein said inlet (15) is arranged so as to be substantially occluded by the piston (2) when the piston is located in said initial position, but at least partially open when the piston (2) is located in said trigger position.

6. An actuation arrangement according to any preceding claim, further comprising a closure member (51) provided in association with the inlet (15), the closure member (51) being arranged to move between a closed position in which it substantially closes said inlet (15) and an open position in which the inlet (15) is at least partially open, in direct response to movement of the piston (2) from its initial position to its trigger position.

7. An actuating arrangement according to claim 6, wherein said closure member (51) is arranged to engage or bear against the piston (2).

8. An actuating arrangement according to any preceding claim, comprising a control valve (31) selectively operable to direct an auxiliary flow of gas (45) against said piston (2) to urge the piston (2) towards said initial position.

9. An actuating arrangement according to claim 8 as dependant upon claim 4 or claim 5, configured such that said auxiliary flow (45) is directed against the piston (2) in a direction substantially opposed to said triggering flow (46).

10. An actuating arrangement according to any claim 8 or claim 9, further comprising a flow passage (16) in fluid communication with said inlet (15) for connection to said gas source (17), the passage (16) having a blocking member (22) which is moveable between an open position and a closed position to selectively open and close the flow passage (16) to the flow of said actuating gas (48), the blocking member (22) being controlled by a further control valve (37) which is operable to direct a flow of gas (49) against the blocking member (22) to urge the blocking member (22) from its open position to its closed position.

11. An actuating arrangement according to claim 10, wherein said blocking member (22) is biased towards its open position.

12. An actuating arrangement according to any one of claims 4 to 11, wherein the or each said valve (27, 31, 37) is arranged in fluid communication with said pressurized gas source (17), such that the flow of gas (46, 45, 49) controlled by the or each respective valve(27, 31, 37) is provided from said pressurized gas source (17).

13. An actuating arrangement according to any one of claims 4 to 12, wherein the or each said valve (27, 37) has an exhaust port (30, 40) and is selectively operable to vent gas through the exhaust port.

14. An actuating arrangement according to claim 13, wherein the or at least one said valve (27, 37) is a 3/2 valve comprising a first port (28, 38) connected to said pressurized gas source (17) , a second port (29, 39) through which the flow of gas (46, 49) controlled by the valve is directed, and said exhaust port (30, 40).

## Patentansprüche

1. Betätigungsanordnung für eine Sicherheitsvorrichtung für motorisiere Fahrzeuge, wobei die Anordnung einen Betätigungskolben (2) zur Verbindung mit der Sicherheitsvorrichtung umfasst, wobei der Kolben (2) in einem Gehäuse (3) bereitgestellt ist, um in Bezug auf das Gehäuse (3) von einer Ausgangsposition in eine Betätigungsposition bewegbar zu sein, wobei das Gehäuse (3) einen Einlass (15) aufweist, um mit einer Druckgasquelle (17) zur Zufuhr von Betätigungsgas (48) in das Gehäuse (3) zum Antrieb des Kolbens (2) in Richtung der Betätigungsposition verbunden zu werden, wobei die Anordnung ausgebildet ist, um zu Beginn eine Bewegung des Kolbens (2) in die Betätigungsposition unter Einwirkung des Betätigungsgases (48) zu verhindern, **gekennzeichnet durch** die Bereitstellung eines Auslösemittels (24, 27), das betätigbar ist, um den Kolben (2) aus der Ausgangsposition in eine Auslöseposition zu bewegen, von der aus das Betätigungsgas (48) wirkt, um den Kolben (2) in die Betätigungsposition zu bewegen.

2. Betätigungsanordnung nach Anspruch 1, die so ausgebildet ist, dass bei Vorliegen des Kolbens (2) in der Ausgangsposition das Betätigungsgas (48) nicht wirksam ist, um den Kolben (2) in die Betätigungsposition zu bewegen.

3. Betätigungsanordnung nach Anspruch 1 oder 2, worin die Auslöseposition zwischen der Ausgangsposition und der Betätigungsposition liegt.

4. Betätigungsanordnung nach einem der vorangegangenen Ansprüche, worin das Auslösemittel ein Auslöseventil (27) umfasst, das wahlweise betätigbar ist, um einen Auslösegasstrom (46) gegen den Kolben (2) zu richten, um den Kolben aus der Ausgangsposition in die Auslöseposition zu bewegen.

5. Betätigungsanordnung nach einem der vorangegangenen Ansprüche, worin der Einlass (15) so angeordnet ist, dass er im Wesentlichen durch den Kolben (2) verschlossen ist, wenn sich der Kolben in seiner Ausgangsposition befindet, aber zumindest teilweise geöffnet ist, wenn sich der Kolben (2) in der Auslöseposition befindet.

6. Betätigungsanordnung nach einem der vorangegangenen Ansprüche, die ferner ein Verschlusselement (51) umfasst, das in Verbindung mit dem Einlass (15) bereitgestellt ist, wobei das Verschlusselement (51) angeordnet ist, um sich - in direkter Reaktion auf die Bewegung des Kolbens (2) aus seiner Ausgangsposition in die Auslöseposition - zwischen einer geschlossenen Position, in der es den Einlass (15) im Wesentlichen verschließt, und einer geöffneten Position, in der der Einlass (15) zumindest teilweise geöffnet ist, zu bewegen.

7. Betätigungsanordnung nach Anspruch 6, worin das Verschlusselement (51) angeordnet ist, um mit dem Kolben (2) in Eingriff zu gelangen oder gegen diesen zu drücken.

8. Betätigungsanordnung nach einem der vorangegangenen Ansprüche, das ein Steuerventil (31) umfasst, das wahlweise betätigbar ist, um einen Hilfsgasstrom (45) gegen den Kolben (2) zu richten, um den Kolben (2) in seine Ausgangsposition zu drücken.

9. Betätigungsanordnung nach Anspruch 8 in Abhängigkeit von Anspruch 4 oder 5, die ausgebildet ist, dass der Hilfsstrom (45) in eine Richtung gegen den Kolben (2) gerichtet ist, die dem Auslösestrom (46) im Wesentlichen entgegengesetzt ist.

10. Betätigungsanordnung nach Anspruch 8 oder 9, die ferner einen Durchflussdurchlass (16) umfasst, der sich in Fluidkommunikation mit dem Einlass (15) zur Verbindung mit der Gasquelle (17) befindet, wobei der Durchlass (16) ein Sperrelement (22) aufweist, das zwischen einer geöffneten Position und einer geschlossenen Position hin- und herbewegbar ist, um den Durchflussdurchlass (16) für den Strom des Betätigungsgases (48) wahlweise zu öffnen und zu verschließen, wobei das Sperrelement (22) durch ein weiteres Steuerventil (37) gesteuert wird, das betätigbar ist, um einen Gasstrom (49) gegen das Sperrelement (22) zu richten, um das Sperrelement (22) aus seiner geöffneten Position in seine geschlossene Position zu drücken.

11. Betätigungsanordnung nach Anspruch 10, worin das Sperrelement (22) in seine geöffnete Position vorgespannt ist.

12. Betätigungsanordnung nach einem der Ansprüche 4 bis 11, worin das oder jedes Ventil (27, 31, 37) in Fluidkommunikation mit der Druckgasquelle (17) angeordnet ist, so dass der durch das oder jedes Ventil (27, 31, 37) gesteuerte Gasstrom (46, 45, 49) von der Druckgasquelle (17) aus bereitgestellt wird.

13. Betätigungsanordnung nach einem der Ansprüche 4 bis 12, worin das oder jedes Ventil (27, 37) eine Auslassöffnung (30, 40) aufweist und wahlweise betätigbar ist, um Gas durch die Auslassöffnung abzulassen.

14. Betätigungsanordnung nach Anspruch 13, worin das Ventil oder zumindest eines der Ventile (27, 37) ein 3/2-Ventil ist, das eine erste Öffnung (28, 38), die mit der Druckgasquelle (17) verbunden ist, eine zweite Öffnung (29, 39), durch die der Gasstrom (46, 49) durch das Ventil gesteuert geleitet wird und die Auslassöffnung (30, 40) umfasst.

## Revendications

1. Agencement d'actionnement pour un dispositif de sécurité de véhicule à moteur, l'agencement comprenant un piston d'actionnement (2) pour la connection d'un dispositif de sécurité, le piston (2) étant prévu dans un boîtier (3) pour un mouvement relativement au boîtier (3) d'une position initiale à une position d'actionnement, le boîtier (3) ayant une entrée (15) pour la connection à une source de gaz comprimé (17) pour l'amenée d'un gaz d'actionnement (48) au boîtier (3) afin d'entraîner le piston (2) vers ladite position d'actionnement, l'agencement étant configuré pour prévenir initialement un mouvement du piston (2) vers la position d'actionnement sous l'action dudit gaz d'actionnement (48), et étant **caractérisé par** la réalisation d'un moyen de déclenchement (24, 27) qui est apte à déplacer le piston (2) de ladite position initiale à une position de déclenchement à partir de laquelle ledit gaz d'actionnement (48) est efficace pour entraîner le piston (2) vers ladite position d'actionnement.

2. Agencement d'actionnement selon la revendication 1, configuré de façon que lorsque le piston (2) se trouve dans ladite position initiale, le gaz d'actionnement (48) est inefficace pour entraîner le piston (2) vers ladite position d'actionnement.

3. Agencement d'actionnement selon la revendication 1 ou la revendication 2, où ladite position de déclenchement est entre ladite position initiale et ladite position d'actionnement.

4. Agencement d'actionnement selon l'une quelconque des revendications précédentes, où ledit moyen de déclenchement comprend une vanne de déclenchement (27) actionnable sélectivement pour diriger un écoulement de gaz de déclenchement (46) contre ledit piston (2) afin d'amener le piston de ladite position initiale à ladite position de déclenchement.

5. Agencement d'actionnement selon l'une quelconque des revendications précédentes, où ladite entrée (15) est agencée pour être sensiblement fermée par le piston (2) lorsque le piston se situe dans ladite position initiale, mais elle est au moins partiellement ouverte lorsque le piston (2) se trouve dans ladite position de déclenchement.

6. Agencement d'actionnement selon l'une quelconque des revendications précédentes, comprenant en outre un élément de fermeture (51) réalisé en association avec l'entrée (15), l'élément de fermeture (51) étant agencé pour se déplacer entre une position fermée dans laquelle il ferme sensiblement ladite entrée (15) et une position ouverte dans laquelle l'entrée (15) est au moins partiellement ouverte, en réponse directe au mouvement du piston (2) de sa position initiale à sa position de déclenchement.

7. Agencement d'actionnement selon la revendication 6, où ledit élément de fermeture (51) est agencé pour venir en prise avec ou porté contre le piston (2).

8. Agencement d'actionnement selon l'une quelconque des revendications précédentes, comprenant une vanne de commande (31) actionnable sélectivement pour diriger un écoulement de gaz auxiliaire (45) contre ledit piston (2) pour solliciter le piston (2) vers ladite position initiale.

9. Agencement d'actionnement selon la revendication 8 dépendant de la revendication 4 ou de la revendication 5, configuré de telle sorte que ledit écoulement auxiliaire (45) est dirigé contre le piston (2) dans une direction sensiblement opposée audit écoulement de déclenchement (46).

10. Agencement d'actionnement selon l'une quelconque des revendications 8 ou 9, comprenant en outre un passage d'écoulement (16) en communication fluidique avec ladite entrée (15) pour la connection à ladite source de gaz (17), le passage (16) ayant un élément de blocage (22) qui est déplaçable entre une position ouverte et une position fermée pour ouvrir et fermer sélectivement le passage d'écoulement (16) pour l'écoulement dudit gaz d'actionnement (48), l'élément de blocage (22) étant commandé par une autre vanne de commande (37) qui est apte à diriger un écoulement de gaz (49) contre l'élément de blocage (22) pour solliciter l'élément de blocage (22) de sa position ouverte à sa position fermée.

11. Agencement d'actionnement selon la revendication 10, où ledit élément de blocage (22) est sollicité vers sa position ouverte.

12. Agencement d'actionnement selon l'une quelconque des revendications 4 à 11, où la ou chaque vanne précitée (27, 31, 37) est agencée en communication fluidique avec ladite source de gaz comprimée (17) de sorte que l'écoulement de gaz (46, 45, 49) commandé par la ou chaque vanne respective (27, 31, 37) est réalisé par ladite source de gaz comprimée (17).

13. Agencement d'actionnement selon l'une quelconque des revendications 4 à 12, où la ou chaque vanne précitée (27, 37) possède un orifice d'évacuation (30, 40) et est actionnable sélectivement pour l'évacuation du gaz à travers l'orifice d'évacuation.

14. Agencement d'actionnement selon la revendication 13, où la ou au moins une desdites vannes (27, 37) est une vanne 3/2 comprenant un premier orifice (28, 38) relié à ladite source de gaz comprimé (17), un deuxième orifice (29, 39) à travers lequel l'écoulement de gaz (46, 49) commandé par la vanne est dirigé, et ledit orifice d'évacuation (30, 40).
